Europäisches Patentamt

(19) European Patent Office

Office européen des brevets

(11) Publication number: **0 301 642 B1**

(12) **EUROPEAN PATENT SPECIFICATION**

(45) Date of publication of patent specification: **29.04.92**   (51) Int. Cl.⁵: **A01B 33/10**

(21) Application number: **88201543.1**

(22) Date of filing: **18.07.88**

(54) **A soil cultivating machine and tine for a soil cultivating machine.**

(30) Priority: **22.07.87 NL 8701725**

(43) Date of publication of application:
**01.02.89 Bulletin 89/05**

(45) Publication of the grant of the patent:
**29.04.92 Bulletin 92/18**

(84) Designated Contracting States:
**DE FR GB NL**

(56) References cited:
**DE-U- 7 820 611**
**NL-A- 7 303 763**
**NL-A- 7 712 317**

(73) Proprietor: **C. van der Lely N.V.**
**Weverskade 10 P.O. Box 26**
**NL-3155 ZG Maasland(NL)**

(72) Inventor: **Van der Lely, Cornelis**
**7, Brüschenrain**
**ZUG(CH)**

(74) Representative: **Mulder, Herman et al**
**Octrooibureau Van der Lely N.V. Weverskade**
**10 P.O. Box 26**
**NL-3155 ZG Maasland(NL)**

Rank Xerox (UK) Business Services
(-/2.18/2.0)

## Description

The invention relates to a soil cultivating machine comprising a frame and soil working members which are rotatable about upwardly extending axes and include at least one tine, having a fastening portion and a downwardly extending active portion, the free end of which is directed in a rearward direction relative to the direction of rotation of the tine. The invention also relates to a tine for a soil cultivating machine.

From the NL application 7712317, which discloses the features of the preambles of claim 1 and 11, a soil cultivating machine as described above is known. The tines of this machine have an operative portion which extends from the fastening portion initially in line with the shaft of the rotary axis of the tine and is then bent over to change into a lower screw shaped portion. The operative portion of the tine tapers in the direction from the fastening portion inwardly towards its free end and on opposite sides the operative portion has a ridge.

With machines of the kind set forth it has been found that in working hard soils. e.g. after harvesting, the tines of the soil working members often have difficulties in penetrating the soil. Now, using the construction according to the invention, there can be achieved an effective penetration into the soil by the tines in that the active portion of the tine has an upper part having a longitudinal centre line making at least partly a first angle with the longitudinal centre line of the fastening portion and passing into a lower part making a second angle with the longitudinal centre line of the fastening portion, the second angle being greater than the first angle, while the upper part and the lower part are lying in a same tangent plane of the rotation circle of the tine, the lower part of the tine further being provided at its lower end with a rib. When constructed thus, the bottom side of the tine can easily penetrate into the hard soil, while the rearwardly extending portion obtains such a position relative to the direction in which the tine moves through the soil that the penetration into the soil is facilitated.

From the former filed but later published application EP-A-0 237 133 a soil cultivating machine is known, which comprises tines, having downwardly extending active portions. Each of the active portions of the tines is at its free end at the rear, taken in the intended direction of rotation of the tine, provided with a bulged-out portion.

The bulged-out portion is drop-shaped and is intended to provide the tine from being weared to rapid. Due to the presence of the bulge, which contains additional material, it will be clear that the tines will have difficulty in penetrating the soil.

For a better understanding of the invention and to show how the same may be carried into effect, reference will now be made, by way of example, to the accompanying drawings, in which:

Figure 1 is a plan view of a soil cultivating machine provided with tines according to the invention;

Figure 2 is, to an enlarged scale, a cross-sectional view taken on the line II - II in Figure 1;

Figure 3 is, to en enlarged scale, a front view of a tine according to the invention;

Figure 4 is a view taken in the direction of the arrow IV in Figure 3, and

Figures 5 to 8 are views taken on the lines V - V, VI - VI, VII - VII and VIII - VIII, respectively, in Figure 4.

The implement shown in the drawings concerns a soil cultivating machine, in particular one for the preparation of a seed bed.

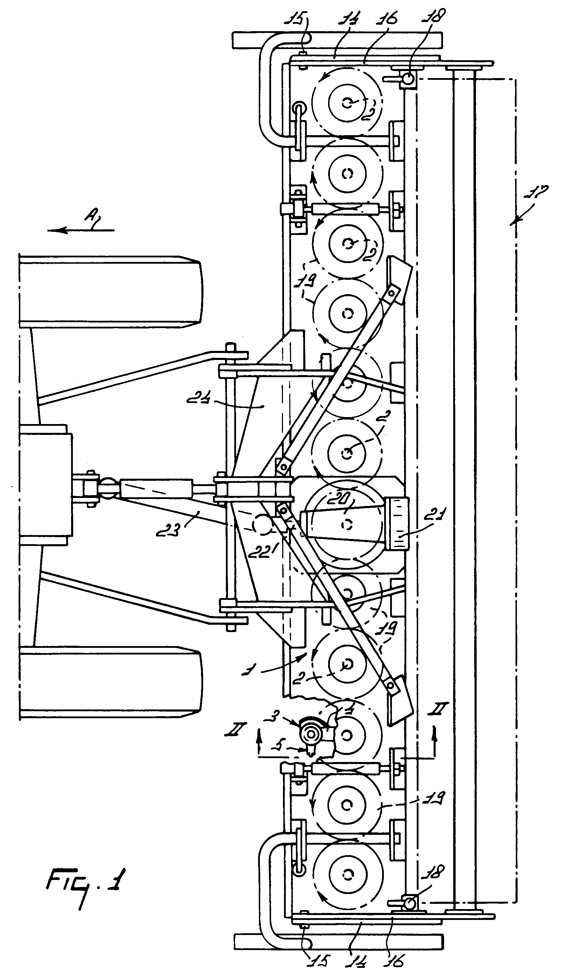

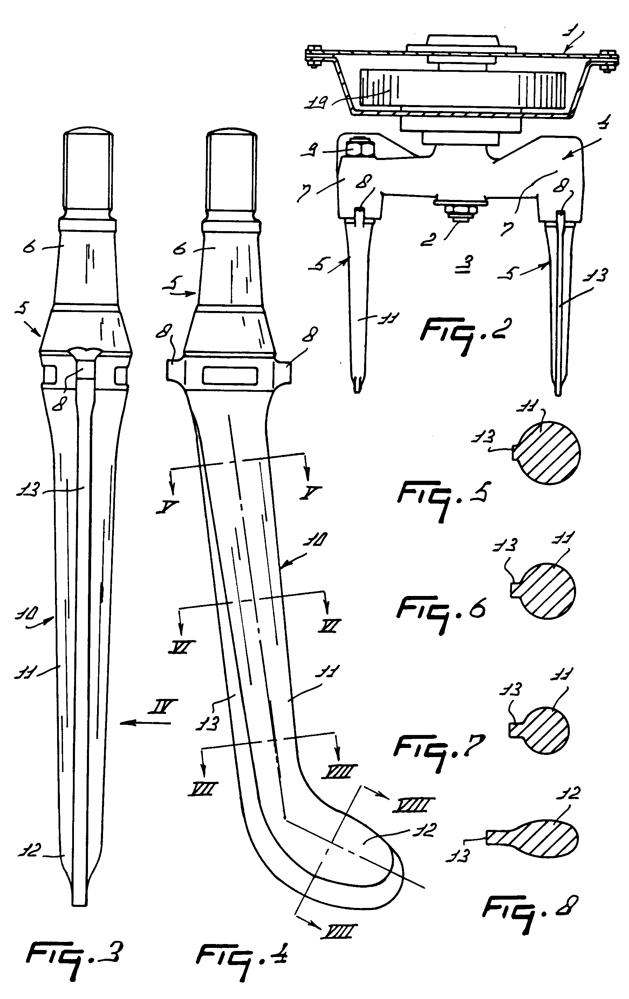

The machine comprises a box-like frame portion 1 which extends transversely to the direction of operative travel A and wherein there are supported at equal interspaces of preferably 25 cms the upwardly directed, preferably vertical, shafts 2 of soil working members 3. Each of the soil working members 3 includes an at least substantially horizontal carrier 4 which is arranged on the end of a shaft 2 projecting from the bottom side of the frame portion 1. At its ends, the carrier 4 is provided with downwardly directed soil working elements afforded by tines 5. Each of the tines 5 includes a fastening portion 6 to be inserted in a holder 7 of the carrier 4 and to be fixed by means of socks 8 at the bottom side and a nut 9 adapted to cooperate with a thread at the upper end thereof. The active portion 10 of the tine 5 has a portion 11 which from the connection to the fastening portion 6 extends straight downwardly and is tapering (Figures 5 to 7), the said portion 11 being of an at least substantially round cross-section. The longitudinal centre line of the portion 11 encloses an angle of approximately 8° with the downward prolongation of the longitudinal centre line of the fastening portion 6, while the tine 5 has been arranged in such a manner that, relative to the rotational direction imparted to a soil working member 3 during operation, the active portion 10 is trailing (Figure 1). At its lower end, the portion 11 merges into a portion 12 which extends rearwardly relative to the rotational direction of a soil working member 3 and whose width originally increases from the point of merger into the upwardly extending portion 11 and decreases gradually thereafter (Figure 4). The longitudinal centre line of the portion 12 encloses an angle of approximately 125° with the longitudinal centre line of the straight, upwardly extending portion 11 and thus encloses an angle of approximately 135° with the vertical. As is apparent from Figure 8, the rearwardly extending portion 12 is of an oval cross-section, the longest diagonal being directed upwardly. As is apparent from Figure 3, the centre lines of the portions 11 and 12 are located in the same plane, which plane is at least substantially tangentially with respect to the axis of rotation of a soil working member 3. At its leading side, relative to the direction of rotation of the soil working member 3, the active portion 10 of each tine 5 is provided with a rib 13 which is of an angular shape and begins near the point of merger from the fastening portion 6. The width of the rib 13 gradually increases in the downward direction until it reaches its maximum near the point of merger of the portion 11 into the portion 12 (Figure 4). Towards the free end of the portion 12, the width of the rib 13 decreases until where the rib 13 merges into the upper side of the portion 11. The portion 12 has a length which is at least substantially one quarter of the length of the portion 11.

The ends of the box-like frame portion 1 are closed by means of plates 14 which extend at least substantially parallel to the direction of operative travel A. Near its leading side, each of the plates 14 is provided with a pin 15 which extends transversely to the direction of operative travel A, the arrangement being such that the pins 15 are in alignment. About each of the shafts 15 there is arranged freely pivotably an arm 16 which extends rearwardly along the inner side of a plate 14. Between the ends of the arms 16 there is supported freely rotatably a roller 17. Near the rear side of the frame portion 1 there is provided an adjusting device 18 which, preferably, is constituted by a threaded spindle and by means of which the position of the arms can be changed, the arrangement being such that hereby, with the aid of the roller 17, the working depth of the soil working members 3 can be set.

Inside the frame portion 1, each of the shafts 2 is provided with a pinion 19, the arrangement being such that the pinions on the shafts of adjacent soil working members 3 are in driving connection with each other. Near the centre of the frame portion 1, the shaft 2 of a soil working member 3 is extended and reaches by means of this extension into a gear box 20, inside which the extension is in driving connection via a bevel gear transmission and a speed variator 21 located at the rear side of the gear box to a shaft 22 which extends in the direction of operative travel A and projects from the gear box at the front side. The end of the shaft 22 projecting from the gear box 20 can be coupled to the power take-off shaft of a tractor via an intermediate shaft 23. Near its centre, the frame portion 1 is fitted with a trestle 24 including a three-point connection for coupling to the three-point lifting hitch of a tractor.

The machine as described in the foregoing operates as follows:

During operation, the machine is connected to the three-point lifting hitch of the tractor by means of the trestle 24 and, during movement in a direction indicated by the arrow A, each of the soil working members 3 can be driven such from the power take-off shaft of the tractor via the intermediate shaft 23 and the above-described transmission that adjacent soil working members 3 rotate in opposite directions, whereby adjacent soil working members 3 by means of their above-described tines 5 cultivate at least contiguous strips of soil. Due to the special design of the active portion 10 having at its leading edge a rib 13 whose width increases downwardly, each of the tines 5 has a highly pulverizing effect, especially on the sub-soil, so that in particular a hard sub-soil can be broken effectively. By means of the rearwardly curved portion 12 of the active portion 10 as well as by the rib 13 provided at the leading and lower edges thereof, an easy penetration into the soil can be obtained when hard soils are being worked. In addition, due to its specific shape, the rearwardly curved portion 12 prolongs the operating life of the tine, while also the tine can move more easily over hard objects, e.g. stones, in the soil.

## Claims

1. A soil cultivating machine comprising a frame and soil working members (3) which are rotatable about upwardly extending axes and include at least one tine (5), having a fastening portion (6) and a downwardly extending active portion (10), the free end of which is directed in a rearward direction relative to the direction of rotation of the tine, characterized in that the active portion (10) of the tine (5) has an upper part (11) having a longitudinal centre line making at least partly a first angle with the longitudinal centre line of the fastening portion (6) and passing into a lower part (12) making a second angle with the longitudinal centre line of the fastening portion, the second angle being greater than the first angle, while the upper part (11) and the lower part (12) are lying in a same tangent plane of the rotation circle of the tine (5), the lower part (12) of the tine (5) further being provided at its lower end with a rib (13).

2. A soil cultivating machine as claimed in claim 1, characterized in that the said rib (13) extends at least partly through the upwardly extending portion of the said active portion (10).

3. A soil cultivating machine as claimed in claim 2, characterized in that the said rib (13) extends to near the fastening portion (16) of the tine (5).

4. A soil cultivating machine as claimed in claim 3, characterized in that, taken in the downward direction, the said rib (13) increases in width.

5. A soil cultivating machine as claimed in any one of the preceding claims, characterized in that the width of the said rib (13) is at least substantially constant over the length of the rearwardly extending portion (12).

6. A soil cultivating machine as claimed in any one of the preceding claims, characterized in that at its free end the said rib (13) merges into the upper side of the rearwardly extending portion (12).

7. A soil cultivating machine as claimed in any one of the preceding claims, characterized in that the said upwardly extending portion (11) of the active portion (10) extends straight and conically downwardly.

8. A soil cultivating machine as claimed in any one of the preceding claims, characterized in that the upwardly extending portion (11) of the active portion (10) has an at least substantially round cross-section and the said rearwardly extending portion (12) an at least substantially oval cross-section.

9. A soil cultivating machine as claimed in any one of the preceding claims, characterized in that the rearwardly extending portion (12) extends through at least one third of the length of the upwardly extending portion (11).

10. A soil cultivating machine as claimed in any one of the preceding claims, characterized in that the soil working members (3) are arranged in side-by-side relationship in a row extending transversely to the direction of operative travel and, during operation, rotate in opposite directions.

11. A tine (5) which can be used in a soil cultivating machine, in particular a soil cultivating machine comprising soil working members (3) which are rotatable about upwardly extending axes, which tine (5) includes a fastening portion (6) and a downwardly extending active portion (10), characterized in that the active portion (10) of the tine (5) has an upper part (11) having a longitudinal centre line making at least partly a first angle with the longitudinal centre line of the fastening portion (6) and passing into a lower part (12) making a second angle with the longitudinal centre line of the fastening portion (6), the second angle being greater than the first angle, while the upper part (11) and the lower part (12) are lying in the same plane, the lower part (12) of the tine (5) further being provided at its lower end with a rib (13).

## Revendications

1. Machine pour cultiver le sol comprenant un châssis et des organes de travail du sol (3) qui sont rotatifs autour d'axes s'étendant vers le haut et comportent au moins une dent (5) ayant une partie de fixation (6) et une partie active (10) s'étendant vers le bas, dont l'extrémité libre est dirigée vers l'arrière par rapport au sens de rotation de la dent,
   **caractérisée** en ce que la partie active (10) de la dent (5) a une partie supérieure (11) ayant un axe longitudinal faisant, au moins partiellement, un premier angle avec l'axe longitudinal de la partie de fixation (6) et, en passant dans une partie inférieure (12), faisant un deuxième angle avec l'axe longitudinal de la partie de fixation, le deuxième angle étant plus grand que le premier angle, tandis que la partie supérieure (11) et la partie inférieure (12) se trouvent dans un même plan tangent au cercle de rotation de la dent (5), la partie inférieure (12) de la dent étant en outre munie à son extrémité inférieure d'une nervure (13).

2. Machine pour cultiver le sol selon la revendication 1, caractérisée en ce que ladite nervure (13) s'étend au moins partiellement sur la partie, s'étendant vers le haut, de ladite partie active (10).

3. Machine pour cultiver le sol selon la revendication 2, caractérisée en ce que ladite nervure (13) s'étend jusqu'au voisinage de la partie de fixation (6) de la dent (5).

4. Machine pour cultiver le sol selon la revendication 3, caractérisée en ce que, vue en regardant vers le bas, ladite nervure (13) s'élargit.

5. Machine pour cultiver le sol selon l'une quelconque des revendications précédentes, caractérisée en ce que la largeur de ladite nervure (13) est au moins sensiblement constante sur la longueur de la partie (12) s'étendant vers l'arrière.

**6.** Machine pour cultiver le sol selon l'une quelconque des revendications précédentes, caractérisée en ce que, sur son extrémité libre, ladite nervure (13) se raccorde au côté supérieur de la partie (12) s'étendant vers le bas.

**7.** Machine pour cultiver le sol selon l'une quelconque des revendications précédentes, caractérisée en ce que ladite partie (11) s'étendant vers le haut, de la partie active (10) s'étend vers le bas de manière rectiligne et conique.

**8.** Machine pour cultiver le sol selon l'une quelconque des revendications précédentes, caractérisée en ce que la partie (11) s'étendant vers le haut, de la partie active (10) a une section au moins sensiblement ronde, et ladite partie (12) s'étendant vers l'arrière une section au moins sensiblement ovale.

**9.** Machine pour cultiver le sol selon l'une quelconque des revendications précédentes, caractérisée en ce que la partie (12) s'étendant vers l'arrière s'étend sur au moins un tiers de la longueur de la partie (11) s'étendant vers le haut.

**10.** Machine pour cultiver le sol selon l'une quelconque des revendications précédentes, caractérisée en ce que les organes de travail du sol (3) sont disposés côte à côte en une rangée s'étendant transversalement au sens de marche du travail et tournent dans des sens contraires pendant le travail.

**11.** Dent (5) utilisable dans une machine pour cultiver le sol, en particulier une machine pour cultiver le sol comprenant des organes de travail du sol (3) qui sont rotatifs autour d'axes s'étendant vers le haut, ladite dent (5) comprenant une partie de fixation (6) et une partie active (10) s'étendant vers le bas,
**caractérisée** en ce que la partie active (10) de la dent (5) a une partie supérieure (11) ayant un axe longitudinal faisant, au moins partiellement, un premier angle avec l'axe longitudinal de la partie de fixation (6) et, en passant dans une partie inférieure (12), un deuxième angle avec l'axe longitudinal de la partie de fixation (6), le deuxième angle étant plus grand que le premier angle, tandis que la partie supérieure (11) et la partie inférieure (12) se trouvent dans le même plan, la partie inférieure (12) de la dent (5) étant en outre munie sur son extrémité inférieure d'une nervure (13).

**Patentansprüche**

**1.** Bodenbearbeitungsmaschine mit einem Gestell und Bodenbearbeitungsgliedern (3), die um aufwärts gerichtete Achsen drehbar sind und mindestens einen Zinken (5) aufweisen, der einen Befestigungsteil (6) und einen nach unten gerichteten Arbeitsteil (10) hat, dessen freies Ende in bezug auf die Umlaufrichtung des Zinkens nach hinten gerichtet ist,
dadurch gekennzeichnet, daß der Arbeitsteil (10) des Zinkens (5) einen oberen Abschnitt (11) aufweist, dessen Längsmittellinie mindestens teilweise einen ersten Winkel mit der Längsmittellinie des Befestigungsteiles (6) bildet, und der in einen unteren Abschnitt (12) übergeht, welcher mit der Längsmittellinie des Befestigungsteiles einen zweiten Winkel bildet, der größer ist als der erste Winkel, wobei der obere Abschnitt (11) und der untere Abschnitt (12) in einer gemeinsamen Tangentialebene des Umlaufkreises des Zinkens (5) liegen, und daß der untere Abschnitt (12) des Zinkens (5) an seinem unteren Ende mit einer Rippe (13) versehen ist.

**2.** Bodenbearbeitungsmaschine nach Anspruch 1, dadurch gekennzeichnet, daß sich die Rippe (13) mindestens teilweise über den aufwärts gerichteten Teil des Arbeitsteiles (10) erstreckt.

**3.** Bodenbearbeitungsmaschine nach Anspruch 2, dadurch gekennzeichnet, daß sich die Rippe (13) bis nahe an den Befestigungsteil (6 ) des Zinkens (5) erstreckt.

**4.** Bodenbearbeitungsmaschine nach Anspruch 3, dadurch gekennzeichnet, daß die Breite der Rippe (13) nach unten zunimmt.

**5.** Bodenbearbeitungsmaschine nach einem der vorhergehenden Ansprüche, dadurch gekennzeichnet, daß die Breite der Rippe (13) über die Länge des nach hinten gerichteten Abschnittes (12) im wesentlichen konstant ist.

**6.** Bodenbearbeitungsmaschine nach einem der vorhergehenden Ansprüche, dadurch gekennzeichnet, daß die Rippe (13) an ihrem freien Ende in die Oberseite des nach hinten gerichteten Abschnittes (12) übergeht.

**7.** Bodenbearbeitungsmaschine nach einem der vorhergehenden Ansprüche, dadurch gekennzeichnet, daß der obere Abschnitt (11) des Arbeitsteiles (10) nach unten geradlinig und konisch verläuft.

**8.** Bodenbearbeitungsmaschine nach einem der vorhergehenden Ansprüche, dadurch gekennzeichnet, daß der obere Abschnitt (11) des Arbeitsteiles (10) mindestens annähernd runden Querschnitt und der nach hinten gerichtete Abschnitt (12) mindestens annähernd ovalen Querschnitt hat.

**9.** Bodenbearbeitungsmaschine nach einem der vorhergehenden Ansprüche, dadurch gekennzeichnet, daß die Erstreckung des nach hinten gerichteten Abschnittes (12) mindestens einem Drittel der Länge des oberen Abschnittes (11) entspricht.

**10.** Bodenbearbeitungsmaschine nach einem der vorhergehenden Ansprüche, dadurch gekennzeichnet, daß die Bodenbearbeitungsglieder (3) nebeneinander in einer quer zur Arbeitsrichtung verlaufenden Reihe angeordnet sind und im Betrieb gegensinnig rotieren.

**11.** Zinken (5) zur Verwendung in einer Bodenbearbeitungsmaschine, insbesondere in einer Bodenbearbeitungsmaschine mit um aufwärts gerichtete Achsen drehbaren Bodenbearbeitungsgliedern (3), mit einem Befestigungsteil (6) und einem nach unten gerichteten Arbeitsteil (10), dadurch gekennzeichnet, daß der Arbeitsteil (10) des Zinkens (5) einen oberen Abschnitt (11) aufweist, dessen Längsmittellinie mindestens teilweise einen ersten Winkel mit der Längsmittellinie des Befestigungsteiles (6) bildet, und der in einen unteren Abschnitt (12) übergeht, welcher mit der Längsmittellinie des Befestigungsteiles (6) einen zweiten Winkel bildet, der größer ist als der erste Winkel, wobei der obere Abschnitt (11) und der untere Abschnitt (12) in derselben Ebene liegen, und daß der untere Abschnitt (12) des Zinkens (5) an seinem unteren Ende mit einer Rippe (13) versehen ist.

FIG.1

FIG.2

FIG.3   FIG.4

FIG.5

FIG.6

FIG.7

FIG.8